# EUROPEAN PATENT APPLICATION

(11) **EP 3 681 115 A1**
(43) Date of publication of application: **15.07.2020**
(21) Application number: 17924093.2
(22) Date of filing: 07.09.2017
(51) Int. Cl.: H04L 27/26, H04W 72/04, H04W 72/12

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/032324
(87) International publication number: WO 2019/049281

(57) **Abstract**

To appropriately perform communication of a control channel when communication is performed by employing a configuration different from the configuration of existing LTE systems, one aspect of a user terminal according to the present invention includes a receiving section that receives a downlink control channel transmitted by using a downlink control channel element (CCE) including a certain number of resource element groups (REGs), and a control section that controls reception of the downlink control channel. If a plurality of REGs constitute a REG group, and the downlink control channel is transmitted by using a plurality of time domains, the control section controls the reception on an assumption that one CCE at least includes REGs of different time domains, and the REGs of the different time domains are included in different REG groups.

## Description

### Technical Field

The present invention relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). In addition, for the purpose of achieving a wider band and a higher speed in comparison to LTE (also referred to as LTE Rel. 8 or Rel. 9), the specifications of LTE-A (also referred to as LTE Advanced, LTE Rel. 10, Rel. 11, or Rel. 12) have been drafted. Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 13," "LTE Rel. 14," "LTE Rel. 15" (or later versions), and so on) are also under study.

In the existing LTE systems (for example, LTE Rel. 8 to Rel. 13), communication of a downlink (DL) and/or an uplink (UL) is performed by using a subframe of 1 ms (also referred to as a transmission time interval (TTI) or the like). The subframe is a transmission time unit of one data packet coded by channel coding, and is a processing unit of scheduling, link adaptation, retransmission control (HARQ (Hybrid Automatic Repeat reQuest)), and so on.

A radio base station controls allocation (scheduling) of data for a user terminal, and notifies the user terminal of a scheduling of data by using downlink control information (DCI). The user terminal monitors a downlink control channel (PDCCH) on which the downlink control information is transmitted, and performs a receiving process (demodulation, a decoding process, and so on). Based on the received downlink control information, the user terminal controls reception of DL data and/or transmission of uplink data.

In the existing LTE systems, transmission of the downlink control channel (PDCCH/EPDCCH) is controlled by using an aggregation of one or more control channel elements (CCEs/ECCEs). Further, each control channel element is constituted with a plurality of resource element groups (REGs/EREGs). The resource element groups are also used to map control channels to resource elements (REs).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In the future radio communication systems (for example, LTE Rel. 14, Rel. 15 or later versions, 5G, NR, and so on), it is assumed that data scheduling is controlled with a configuration different from the configuration of the existing LTE systems (for example, LTE Rel. 13 or earlier versions). Specifically, support of flexible use of numerologies and frequencies, and implementation of a dynamic frame configuration are required for the future radio communication systems. For example, the numerology refers to a communication parameter (for example, a subcarrier spacing, a bandwidth, and so on) employed in transmission and/or reception of a certain signal.

Further, for the future radio communication systems, the use of a configuration of a control channel different from the configuration of the existing LTE systems is under study. For example, defining REG groups (or REG bundles) each including a plurality of REGs, and controlling communication (for example, transmitting and/or receiving processes, and so on) by using at least the REG groups is under study. If the control channel is transmitted and/or received by employing a configuration different from the configuration of the existing LTE systems as described above, it is difficult to directly apply a control scheme of the existing LTE systems (for example, a transmission and/or reception method).

The present invention is made in view of the above, and has one object to provide a user terminal and a radio communication method that enable appropriate communication of a control channel when communication is performed by employing a configuration different from the configuration of existing LTE systems. Solution to Problem

A user terminal according to one aspect of the present invention includes a receiving section that receives a downlink control channel transmitted by using a downlink control channel element (CCE) including a certain number of resource element groups (REGs); and a control section that controls reception of the downlink control channel, wherein when a plurality of REGs constitute a REG group, and the downlink control channel is transmitted by using a plurality of time domains, the control section controls the reception on an assumption that one CCE at least includes REGs of different time domains, and the REGs of the different time domains are included in different REG groups. Advantageous Effects of Invention

According to the present invention, appropriate communication of a control channel is enabled when communication is performed by employing a configuration different from the configuration of existing LTE systems.

### Brief Description of Drawings

FIG. 1A and FIG. 1B are diagrams to show examples of downlink control channels in existing LTE and future radio communication systems, respectively;
FIG. 2 is a diagram to show an example of a mapping method of NR-CCEs/REG bundles when a control resource set is configured to one symbol;
FIG. 3 is a diagram to show an example of a mapping method of NR-CCEs/REG bundles when a control resource set is configured to a plurality of symbols;
FIG. 4 is a diagram to show an example of a mapping method of NR-CCEs/REG bundles when a control resource set is configured to a plurality of symbols;
FIG. 5A and FIG. 5B are each a diagram for illustrating mapping of NR-CCEs/REG bundles according to AGs, when a control resource set is configured to a plurality of symbols;
FIG. 6 is a diagram to show an example of a schematic structure of a radio communication system according to one embodiment of the present invention;
FIG. 7 is a diagram to show an example of an overall structure of a radio base station according to one embodiment of the present invention;
FIG. 8 is a diagram to show an example of a functional structure of the radio base station according to one embodiment of the present invention;
FIG. 9 is a diagram to show an example of an overall structure of a user terminal according to one embodiment of the present invention;
FIG. 10 is a diagram to show an example of a functional structure of the user terminal according to one embodiment of the present invention; and
FIG. 11 is a diagram to show an example of a hardware structure of the radio base station and the user terminal according to one embodiment of the present invention.

### Description of Embodiments

In the existing LTE systems, a base station transmits, to a UE, downlink control information (DCI) by using a downlink control channel (for example, a PDCCH (Physical Downlink Control Channel), an enhanced PDCCH (EPDCCH), and so on). Transmission of downlink control information may be interpreted as transmission of a downlink control channel.

For example, the DCI may be scheduling information including at least one of time/frequency resources for scheduling data, transport block information, data modulation scheme information, HARQ retransmission information, information related to a demodulation RS, and so on. DCI for scheduling DL data reception and/or DL reference signal measurement may be referred to as a DL assignment or a DL grant, and DCI for scheduling UL data transmission and/or UL sounding (measurement) signal transmission may be referred to as a UL grant.

The DL assignment and/or the UL grant may include information related to at least one of channel resources, a sequence, and a transmission format for transmitting a UL control signal (UCI (Uplink Control Information)), such as a HARQ-ACK feedback for DL data and/or channel measurement information (CSI (Channel State Information)). DCI for scheduling the UL control signal (UCI (Uplink Control Information)) may be specified separately from the DL assignment and the UL grant.

The UE is configured to monitor a set of a certain number of downlink control channel candidates. Here, for example, to "monitor" refers to an attempt to decode each downlink control channel related to a target DCI format within the set. Such decoding is also referred to as blind decoding (BD) and blind detection. The downlink control channel candidates are also referred to as BD candidates, (E)PDCCH candidates, and so on.

A set of downlink control channel candidates (a plurality of downlink control channel candidates) to be monitored is also referred to as a search space. The base station maps DCI to a certain downlink control channel candidate included in a search space. The UE performs blind decoding for one or more candidate resources within the search space to detect DCI for the UE. The search space may be configured with higher layer signaling shared by users, or may be configured with higher layer signaling dedicated to a user. On one carrier, two or more search spaces may be configured for the user terminal.

In existing LTE, for the purpose of implementing link adaptation, a plurality of types of aggregation levels (ALs) are specified in the search space. The AL corresponds to the number of control channel elements (CCEs)/enhanced control channel elements (ECCEs (Enhanced CCEs)) constituting DCI. The search space is configured to include a plurality of downlink control channel candidates for a certain AL. Each downlink control channel candidate includes one or more resource units (CCEs and/or ECCEs).

Types of search spaces include a common search space configured to be shared by UEs, and a UE-specific search space configured for an individual UE. In the UE-specific search space of the PDCCH of existing LTE, ALs (= number of CCEs) is 1, 2, 4, and 8. The number of BD candidates is specified as 6, 6, 2, and 2, respectively for AL = 1, 2, 4, and 8.

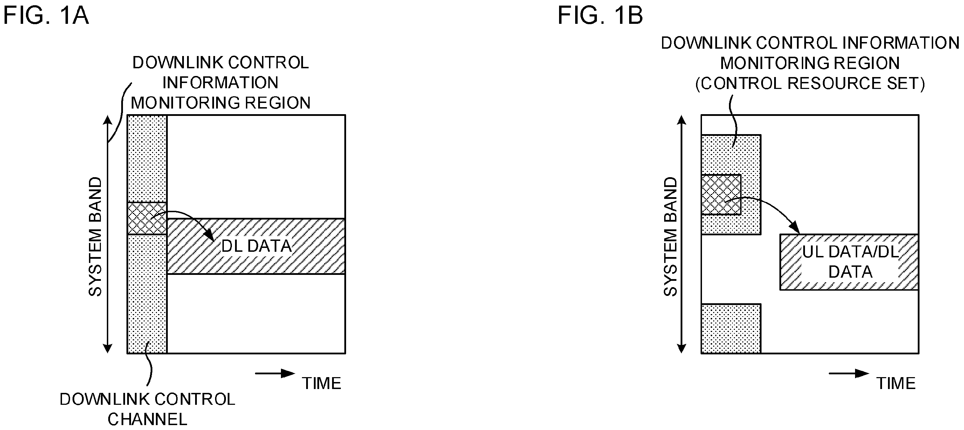

In the existing LTE systems, the downlink control channel (or downlink control information) is transmitted by using the entire system bandwidth (see FIG. 1A). Therefore, the UE needs to monitor the entire system bandwidth for each subframe irrespective of whether DL data is allocated, and receives (performs blind decoding for) the downlink control information.

Instead of performing communication by constantly using the entire system band on a certain carrier, in the future radio communication systems, by contrast, it is conceivable to control communication by dynamically or semi-statically configuring a certain frequency domain (also referred to as a frequency band), based on a communication application, a communication environment, and/or the like. For example, in the future radio communication systems, it is conceivable to control transmission of downlink control information by configuring a certain frequency domain (see FIG. 1B), instead of invariably allocating downlink control information for a certain UE to the entire system band to transmit the downlink control information.

Radio resources defined by the certain frequency domain and time domain (for example, one OFDM symbol, two OFDM symbols, and so on) configured for the UE are also referred to as a control resource set (CORESET), a control subband, a search space set, a search space resource set, a control region, a control subband, an NR-PDCCH region, or the like.

Each control resource set includes a certain number of resource units, and can be configured with a system bandwidth (carrier bandwidth), or to or lower than a maximum bandwidth within which the user terminal can perform a receiving process. For example, the control resource set can include one or more RBs (PRBs and/or VRBs) in the frequency direction. Here, the RB refers to a frequency resource block unit constituted with 12 subcarriers, for example. The UE can monitor downlink control information within the range of the control resource set, and can control reception. Consequently, the UE no longer needs to constantly monitor the entire system bandwidth during a receiving process of downlink control information. As a result, power consumption can be reduced.

Incidentally, support of flexible use of numerologies and frequencies, and implementation of a dynamic frame configuration are required for 5G/NR. Here, the numerology refers to a communication parameter (for example, at least one of a subcarrier spacing (SCS), a bandwidth, a symbol length, a cyclic prefix (CP) length, a transmission time interval (TTI) length, the number of symbols for each TTI, a radio frame configuration, a filtering process, a windowing process, and so on) related to the frequency domain and/or the time domain.

For 5G/NR, configuration of a new PDCCH (hereinafter also referred to as an NR-PDCCH) is under study. For example, the use of a certain unit (for example, a fundamental unit/basic unit) constituting the NR-PDCCH as a resource element group (REG) is under study. Specifically, the REG (hereinafter also referred to as an NR-REG) includes a certain resource block (for example, one PRB) of a certain period (for example, one symbol). One NR-PDCCH may be mapped to a plurality of symbols and/or a plurality of PRBs.

When the NR-REG includes one PRB of one symbol, it is conceivable to perform a receiving process (for example, a demodulation process) of the NR-PDCCH by using a demodulation reference signal (for example, a DMRS). From the point of view of enhancing NR-PDCCH channel estimation accuracy, it may be conceivable to map more reference signals to REs (for example, 12 REs) within the NR-REG. However, using more resources for mapping of reference signal results in increase of overhead, leading to reduction in the number of resources to be used for mapping of downlink control channel. In contrast, using a small number of resources for mapping of reference signal results in deterioration in channel estimation accuracy, leading to deterioration in communication quality.

In view of this, grouping a plurality of NR-REGs together in NR-PDCCH processing (NR-PDCCCH processing) is under study. For example, NR-REG groups each includes a plurality of NR-REGs are configured, and communication (for example, a receiving process such as channel estimation) is performed at least in the unit of NR-REG group. In this manner, channel estimation accuracy can be enhanced.

For example, the base station applies one precoding process (one precoder) to NR-REGs included in one REG group. The UE may assume that one precoder is applied to REGs within one REG group to perform a receiving process by averaging channel estimation results obtained by using reference signals within the REG group. According to this configuration, channel estimation in the NR-PDCCH processing can be performed by using reference signals (hereinafter also referred to as DMRSs) included in the plurality of NR-REGs (PRBs). As a result, channel estimation accuracy can be enhanced.

As a matter of course, the UE may perform a receiving process by using channel estimation results different for each NR-REG, without averaging channel estimation results obtained by using DMRSs within the REG group. Alternatively, the UE may perform a receiving process by averaging channel estimation results obtained by using another plurality of NR-REGs within the REG group. Alternatively, the UE may perform a receiving process by averaging channel estimation results obtained by using DMRSs of a plurality of NR-REG groups.

A plurality of (for example, at least two) NR-REGs constituting a REG group may be continuously mapped to the frequency domain and/or the time domain. This configuration is preferable in averaging channel estimation accuracy by using the DMRS included in each NR-REG. Note that the REG group may be referred to as a REG bundle, a REG bundling, a Super-REG, or a sub-CCE.

In 5G/NR, configuration that the NR-PDCCH includes one or more CCEs (hereinafter also referred to as NR-CCEs), and the NR-CCE includes a plurality of NR-REGs and/or one or more REG groups is under study. For example, configuration that one NR-CCE is defined by a certain number of (for example, six) NR-REGs, and the REG group includes a plurality of (for example, two, three, or six) NR-REGs is conceivable.

The number of NR-REGs constituting the REG group may be determined based on whether interleaving process (interleaving) is applied to the NR-CCEs (or NR-REGs). For example, when interleaving is not performed, six NR-REGs constituting each NR-CCE are grouped together to constitute a REG bundle, and the six NR-REGs are continuously mapped in the frequency direction and/or the time direction. In this case, a plurality of NR-CCEs corresponding to one PDCCH (one piece of DCI) may be continuously mapped in the frequency direction.

When interleaving is applied, two, three, or six NR-REGs may be grouped together to constitute a REG bundle, and interleaving may be performed for each REG bundle. Interleaving may be applied within a certain region (control resource set) to which the downlink control channel is mapped.

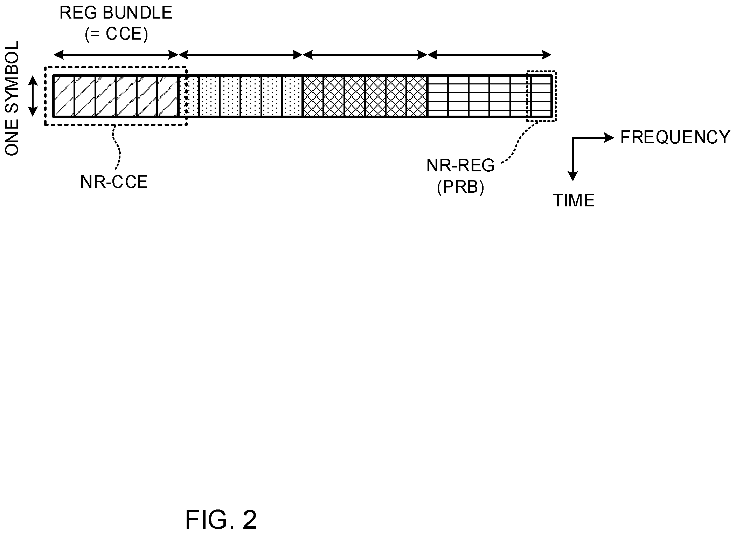

FIG. 2 shows an example of a mapping example of REG bundles and/or NR-CCEs when the control resource set is configured to one symbol. Here, the figure shows a case where the NR-CCE includes six NR-REGs, and the six NR-REGs constitute the REG bundle. The figure shows a case where interleaving is not applied. As a matter of course, the following description can apply to a case where the REG bundle includes two or three NR-REGs, or a case where interleaving is applied.

In this case, six NR-REGs constituting the REG bundle are continuously mapped in the frequency direction. The NR-CCEs constituting the NR-PDCCH include six consecutive NR-REGs. In this case, when each NR-CCE is constituted with a REG bundle different from one another, a different precoder (or a different beam) can be applied to each individual NR-CCE (or each downlink control channel candidate). Therefore, the base station can transmit the downlink control channel (or the downlink control information) by using the NR-CCE to which a precoder optimal for each UE is applied.

In this manner, transmission and/or reception of the downlink control channel for each REG bundle (REG group), being a bundle of a plurality of NR-REGs, is under study. At the same time, how to control mapping of the REG bundles and/or the NR-CCEs when the control resource set is configured to a plurality of time domains (for example, symbols) has been posing a problem.

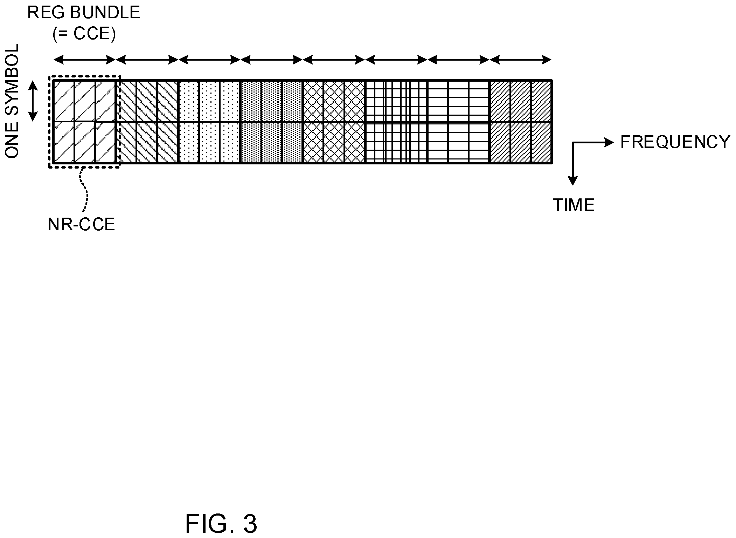

For example, it is conceivable to map the NR-CCE so as to be mapped to a plurality of symbols. In this manner, when the NR-CCE is first mapped in the time direction (time-first mapping) in the configuration that the downlink control channel is transmitted by using a plurality of symbols (configuration that the control resource set is configured to a plurality of symbols), the number of symbols of the REG group or the CCE transmitted through the same precoding can be substantially increased. As a result, coverage can be extended. In this case, a configuration that one NR-CCE includes a plurality of NR-REGs included in one REG bundle (a configuration that the NR-REGs are mapped in the time direction) is conceivable (see FIG. 3).

FIG. 3 shows an example of a mapping example of REG bundles and/or NR-CCEs when the control resource set is configured to two symbols. Here, the figure shows a case where the NR-CCE mapped to two symbols includes six NR-REGs, and the six NR-REGs constitute the REG bundle. The figure shows a case where interleaving is not applied.

In FIG. 3, the REG bundle is defined by two NR-REGs in the time direction and three NR-REGs in the frequency direction. The NR-CCE constituting the NR-PDCCH is defined by two NR-REGs in the time direction and three NR-REGs in the frequency direction. In this case, one certain precoder can be applied to each individual NR-CCE (or control channel candidate).

As described above, when the control resource set is configured to a plurality of symbols, it is conceivable to employ a configuration that the NR-CCE (or the control channel candidate) is mapped to the plurality of symbols, and the NR-REGs of the plurality of symbols included in the NR-CCE belong to one REG bundle.

In addition, the inventors of the present invention have focused on that different precoders (or beams) may be applied in the time direction, depending on a communication environment, a communication condition, or the like. For example, in a communication environment (for example, at high frequencies such as millimeter waves), it is conceivable to employ analog beamforming, instead of digital beamforming. When analog beamforming is employed, it is assumed that different beams (precoders) are switchably applied in the time direction.

In this case, when one CCE set to different time domains is invariably constituted with a plurality of NR-REGs included in one REG bundle (see FIG. 3), NR-REG mapping in the time direction may not be flexibly controlled. Accordingly, analog beamforming and so on may not be flexibly employed.

In view of this, the inventors of the present invention come up with an alternative configuration that, in a case that one NR-CCE is constituted with a plurality of time domains, the NR-REGs are mapped in the frequency direction and that the NR-REGs in different time domains constituting the one NR-CCE belong to different REG groups. This configuration enables support of a precoder cycle in which different precoders are applied in the time domain (time-domain precoder-cycling).

Embodiments according to the present invention will be described in detail with reference to the drawings as follows. The configuration illustrated in each aspect may be employed independently or may be employed in combination. The following description illustrates a case where one NR-CCE includes six NR-REGs, but the present embodiment is not limited to this case. The following description assumes a case where interleaving is not applied, but the present embodiment can be similarly carried out in a case where interleaving is applied. The present embodiment can be preferably applied to analog beamforming, but the present embodiment may also be applied to digital beamforming (also including a digital-analog hybrid).

### <NR-REG/NR-CCE Mapping>

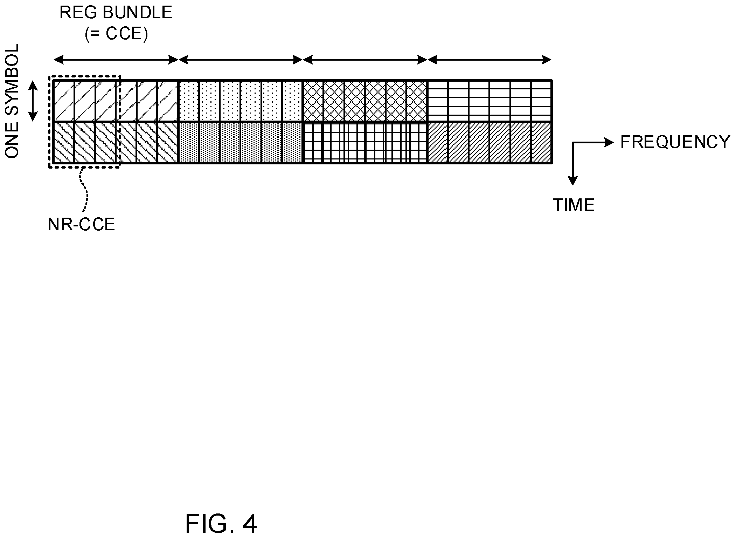

FIG. 4 shows an example of mapping of the NR-REGs and/or the NR-CCEs when the precoder cycle in the time domain (time-domain precoder-cycling) is applied. FIG. 4 shows a case where the downlink control channel is transmitted in a plurality of time domains (here, two symbols). In other words, the case corresponds to a case where the control resource set is configured to two symbols. Note that the control resource set may be configured to three or more symbols.

In FIG. 4, a plurality of NR-REGs (here, six NR-REGs) constituting the REG group (REG bundle) are mapped in the frequency direction, and are thereby continuously mapped in the frequency direction. In other words, the NR-REGs of a different time domain include NR-REGs of a different REG bundle. The NR-CCE is constituted with two consecutive NR-REGs in the time direction and three consecutive NR-REGs in the frequency direction.

In this configuration, among the six NR-REGs that constitute one NR-CCE (control channel candidate), three NR-REGs mapped to the first symbol belong to the first REG bundle, and the other three NR-REGs mapped to the second symbol belong to the second REG bundle. The UE performs a receiving process, on an assumption that one NR-CCE (or downlink control channel candidate) includes a plurality of symbols, and the NR-REGs belonging to different REG groups are mapped to respective symbols.

The base station can control transmission of the downlink control channel by applying different precoders for each symbol. In this manner, the downlink control channel can be transmitted by preferably using analog beamforming, in which precoders (beams) are changed in the time direction.

### <Aggregation Level>

The UE and/or the base station may limit aggregation levels (ALs) to which mapping of the NR-REGs and/or the NR-CCEs shown in FIG. 4 is applied. In other words, mapping of the NR-REGs and/or the NR-CCEs shown in FIG. 4 may be applied to only certain ALs.

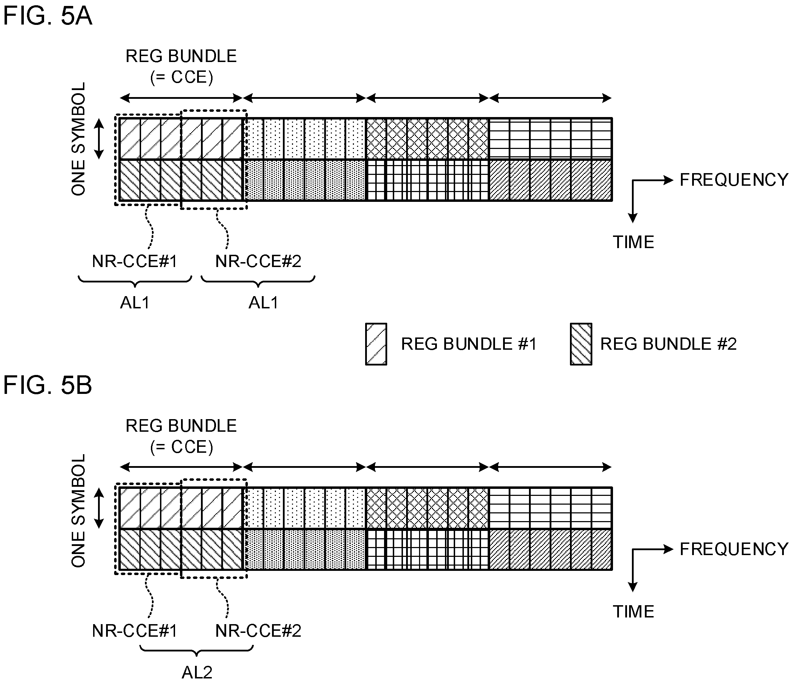

For example, when the NR-PDCCH (or the DCI) is transmitted to the UE by using one NR-CCE (AL 1), the NR-REGs belonging to one REG bundle are included in a plurality of NR-CCEs (see FIG. 5A). In FIG. 5A, each of NR-CCE #1 and NR-CCE #2 includes REG bundle #1 and REG bundle #2. When different NR-CCEs constitute one REG bundle in AG 1, such NR-CCEs constituting one REG bundle may be applied to PDCCHs of different UEs. In this case, scheduling and precoding control on the base station side needs to be performed so as to be shared by a plurality of UEs, instead of being performed to an individual UE. This may cause a problem of making the control of the base station complex.

In view of this, when the precoder cycle in the time domain is applied to mapping of the NR-REGs and/or the NR-CCEs, a certain AL (for example, AL 1) may not be used.

For example, when the mapping method shown in FIG. 4 is employed, the UE may control so as not to monitor PDCCH candidates corresponding to a certain AL (for example, AL 1). In other words, when the mapping method shown in FIG. 4 is employed, two or more (AL 2 or higher) NR-CCEs are used to control transmission and/or reception of the NR-PDCCH.

FIG. 5B shows an example when one NR-PDCCH is transmitted by using two NR-CCEs (AL 2). In this case, the two NR-CCEs constituting the NR-PDCCH may include NR-CCE #1 and NR-CCE #2 that include one REG bundle. When the NR-REGs constituting the REG bundle are continuous in the frequency direction, two NR-CCEs constituting one NR-PDCCH are also continuous. In this manner, the downlink control channel can be transmitted/received to/from one UE, by using a plurality of NR-CCEs constituted with one REG bundle.

### <Configuration of NR-REG/NR-CCE Mapping Method>

The base station may notify the UE of the NR-REG and/or NR-CCE mapping method (or configure the NR-REG and/or NR-CCE mapping method for the UE). For example, when the mapping method (first mapping method) employing the precoder cycle in the time domain (time-domain precoder-cycling) is performed, the base station configures the first mapping method for the UE. The configuration of the mapping method may be notified from the base station to the UE by using higher layer signaling (for example, higher layer signaling and/or broadcast signaling), and/or downlink control information.

For example, when the control resource set is configured to a plurality of symbols, the base station switchably configures, for the UE, a first mapping method (see FIG. 4) in which a plurality of NR-REGs included in the REG bundle are first mapped in the frequency direction, and a second mapping method (see FIG. 3) in which a plurality of NR-REGs included in the REG bundle are first mapped in the time direction. When the control resource set is configured to one symbol, a common mapping method (see FIG. 2) may be applied.

The UE controls a receiving process (for example, blind complex), based on a notification from the base station. In a case that the AG is limited when the first mapping method is used, the UE performs control by also changing the AL to be monitored, based on the notified mapping method.

An applied mapping method (the first mapping method or the second mapping method) may be configured for each frequency band (for example, CC and/or cell). For example, the first mapping method may be applied to a first frequency domain (for example, a first CC), and the second mapping method may be applied to a second frequency domain (for example, a second CC). The mapping method is not limited to the first mapping method and the second mapping method, and other mapping methods may be used as well.

By notifying the UE of the mapping method to be applied according to a communication environment (for example, a frequency band and so on) as described above, transmission and/or reception of the downlink control channel can be flexibly controlled.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

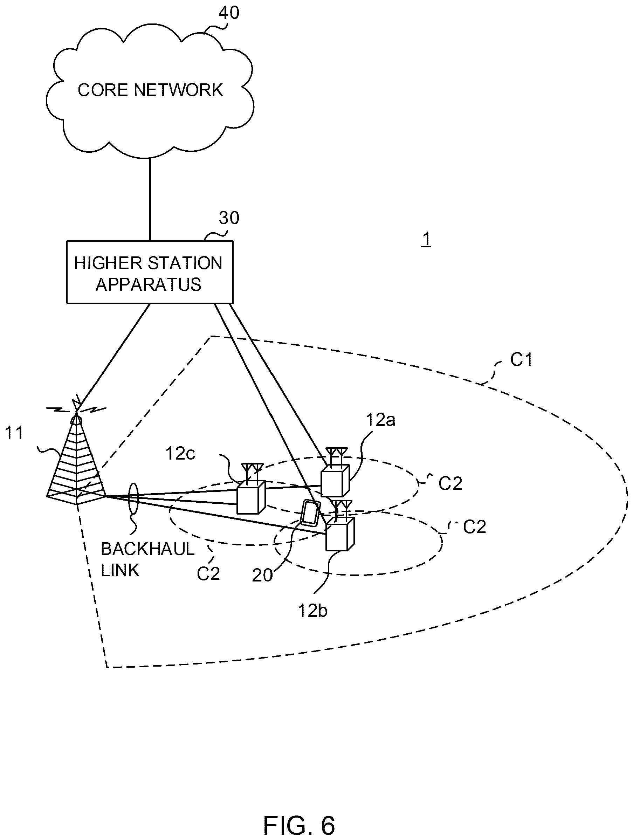

FIG. 6 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)," "NR (New Radio)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement of each cell and user terminal 20 is by no means limited to the arrangement shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 may adopt CA or DC by using a plurality of cells (CCs) (for example, five or less CCs, or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, an optical fiber in compliance with the CPRI (Common Public Radio Interface), an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, different numerologies may be employed within a cell and/or between cells. Note that, for example, the numerology refers to a communication parameter (for example, a subcarrier spacing, a bandwidth, and so on) employed in transmission and/or reception of a certain signal.

In the radio communication system 1, a downlink shared channel (PDSCH (Physical Downlink Shared Channel), which is shared by the user terminals 20, a broadcast channel (PBCH (Physical Broadcast Channel)), downlink L1/L2 control channels and so on, are used as downlink channels. User data, higher layer control information, SIBs (System Information Blocks) and so on are transmitted on the PDSCH. The MIBs (Master Information Blocks) are transmitted on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. Delivery confirmation information (for example, also referred to as "retransmission control information," "HARQ-ACK," "ACK/NACK," and so on) of HARQ (Hybrid Automatic Repeat reQuest) to a PUSCH is communicated on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is shared by the user terminals 20, an uplink control channel (PUCCH (Physical Uplink Control Channel)), a random access channel (PRACH (Physical Random Access Channel)) and so on are used as uplink channels. User data, higher layer control information and so on are communicated on the PUSCH. Further, downlink radio quality information (CQI (Channel Quality Indicator)), delivery confirmation information, and so on are communicated on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

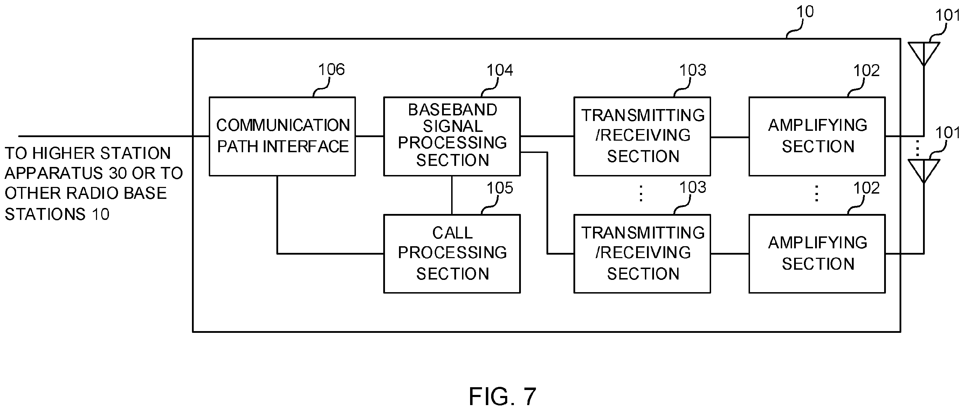

FIG. 7 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, a HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 transmit a downlink control channel by using a downlink control channel element (CCE) including a certain number of resource element groups (REGs). When a plurality of REGs constitute a REG group, and the downlink control channel is transmitted by using a plurality of time domains, the transmitting/receiving sections 103 transmit so that one CCE at least includes REGs of different time domains, and the REGs of the different time domains are included in different REG groups. Further, the transmitting/receiving sections 103 transmit information related to an applied mapping method.

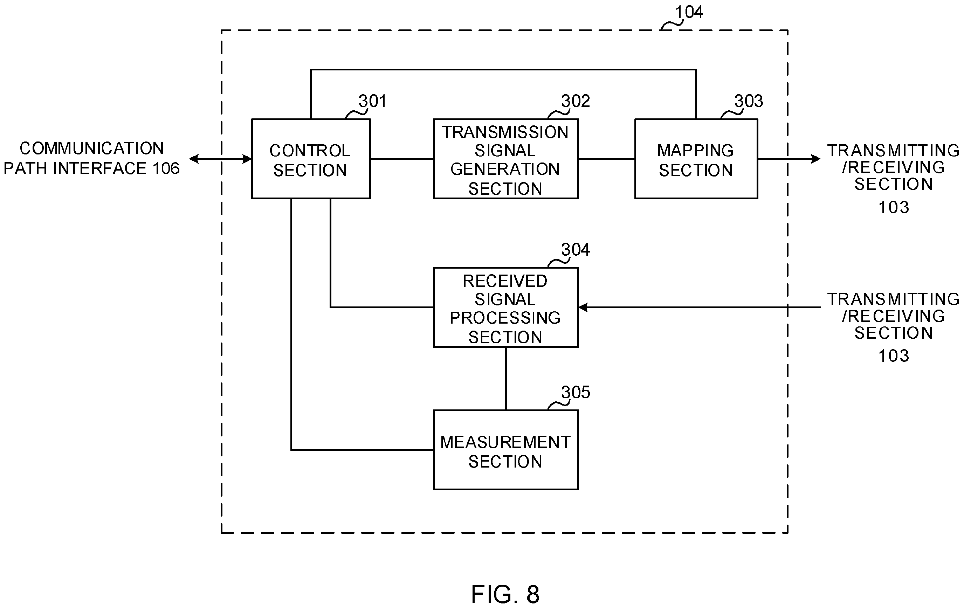

FIG. 8 is a diagram to show an example of a functional structure of the radio base station according to one embodiment of the present invention. Note that, the present example primarily shows functional blocks that pertain to characteristic parts of the present embodiment, and the radio base station 10 includes other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls scheduling (for example, resource allocation) of system information, a downlink data signal (for example, a signal transmitted on a PDSCH), and a downlink control signal (for example, a signal transmitted on a PDCCH, an EPDCCH, an NR-PDCCH). Based on the results of determining necessity or not of retransmission control to the uplink data signal, or the like, the control section 301 controls generation of a downlink control signal (for example, delivery confirmation information and so on), a downlink data signal, and so on. The control section 301 controls the scheduling of a synchronization signal (for example, a PSS (Primary Synchronization Signal)/an SSS (Secondary Synchronization Signal)), a downlink reference signal (for example, a CRS, a CSI-RS, a DMRS), and so on.

The control section 301 controls scheduling of an uplink data signal (for example, a signal transmitted on a PUSCH), an uplink control signal (for example, a signal transmitted on a PUCCH and/or a PUSCH), a random access preamble transmitted on a PRACH, an uplink reference signal, and so on.

When a plurality of REGs constitute a REG group, and the downlink control channel is transmitted by using a plurality of time domains, the control section 301 controls transmission so that one CCE at least includes REGs of different time domains, and the REGs of the different time domains are included in different REG groups.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of a downlink signal and UL grant to report assignment information of an uplink signal, based on commands from the control section 301. For a downlink data signal, encoding processing and modulation processing are performed in accordance with a coding rate, modulation scheme, or the like determined based on channel state information (CSI) or the like from each user terminal 20.

The mapping section 303 maps the downlink signals generated in the transmission signal generation section 302 to the certain radio resources described above, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present invention pertains.

The received signal processing section 304 outputs the decoded information acquired through the receiving processes to the control section 301. For example, when the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

For example, the measurement section 305 may measure received power of a received signal (for example, Reference Signal Received Power (RSRP), received quality (for example, Reference Signal Received Quality (RSRQ) and Signal to Interference plus Noise Ratio (SINR)), uplink channel information (for example, CSI), and so on. The measurement results may be output to the control section 301.

### (User Terminal)

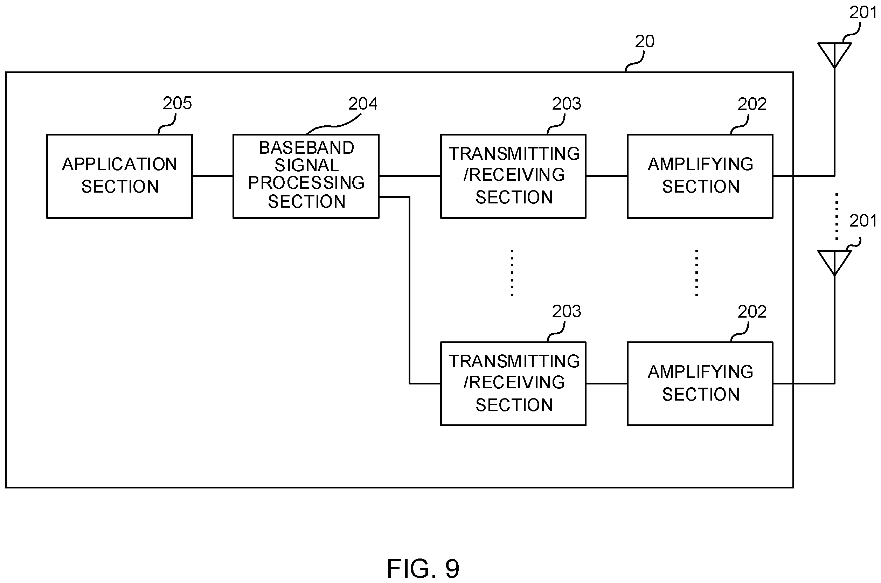

FIG. 9 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, a HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive a downlink control channel transmitted by using a downlink control channel element (CCE) consisting of a certain number of resource element groups (REGs). When a plurality of REGs constitute a REG group, and the downlink control channel is transmitted by using a plurality of time domains, the transmitting/receiving sections 203 transmit so that one CCE at least includes REGs of different time domains, and the REGs of the different time domains are included in different REG groups. Further, the transmitting/receiving sections 203 transmit information related to a mapping method employed for the downlink control channel.

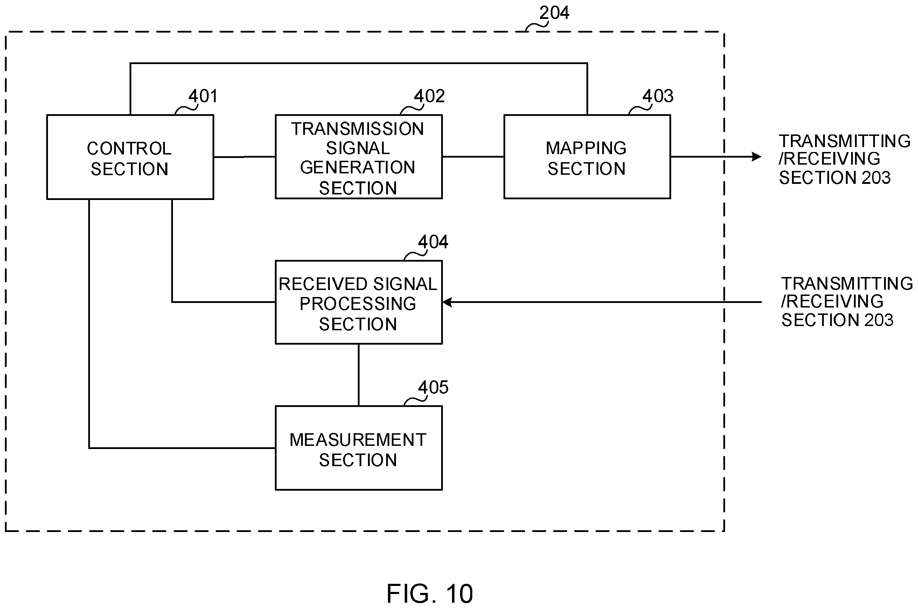

FIG. 10 is a diagram to show an example of a functional structure of a user terminal according to one embodiment of the present invention. Note that, the present example primarily shows functional blocks that pertain to characteristic parts of the present embodiment, and the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires, from the received signal processing section 404, a downlink control signal (for example, a signal transmitted on the NR-PDCCH) and a downlink data signal (for example, a signal transmitted on the PDSCH) that are transmitted from the radio base station 10. The control section 401 controls generation of an uplink control signal (for example, delivery confirmation information and so on) and/or an uplink data signal, based on the results of determining necessity or not of retransmission control to a downlink control signal and/or a downlink data signal.

When a plurality of REGs constitute a REG group, and the downlink control channel is transmitted by using a plurality of time domains, the control section 401 controls reception on an assumption that one CCE at least includes REGs of different time domains, and the REGs of the different time domains are included in different REG groups.

The one CCE may include a plurality of REGs being continuous in a frequency direction in one time domain and belonging to one REG group. When the downlink control channel is transmitted by using the plurality of time domains, the plurality of REGs included in one REG group may be first mapped in the frequency direction.

The control section 401 may control so as not to monitor the downlink control channel corresponding to aggregation level 1. When the downlink control channel is transmitted by using the plurality of time domains, the control section 401 may switchably control a receiving process on an assumption that the REGs of the different time domains are included in different REG groups and a receiving process on an assumption that the REGs of the different time domains are included in one REG group, based on a notification from a base station.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about delivery confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. For example, the measurement section 405 carries out the measurement by using downlink reference signals transmitted from the radio base station 10. The measurement section 405 can be constituted with a measurer, a measurement circuit or measurement apparatus that can be described based on general understanding of the technical field to which the present invention pertains.

For example, the measurement section 405 may measure received power of a received signal (for example, RSRP), received quality (for example, RSRQ, and received SINR), downlink channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

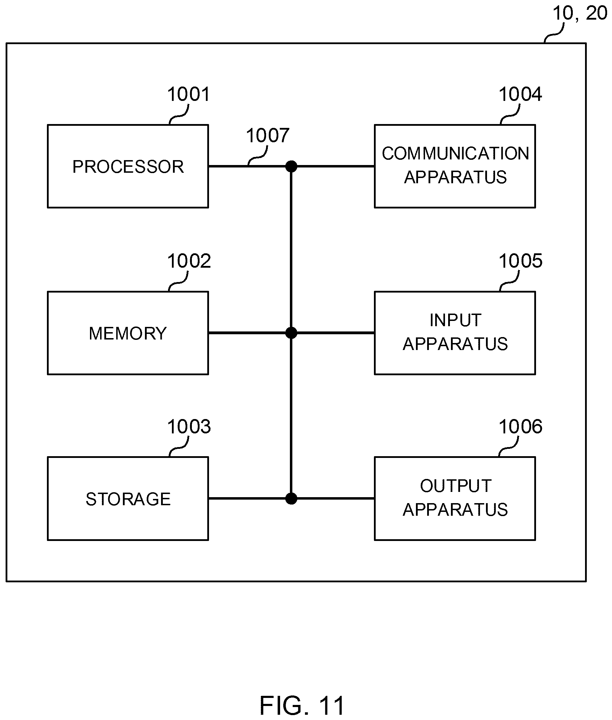

For example, a radio base station, a user terminal, and so on according to one embodiment of the present invention may function as a computer that executes the processes of the radio communication method of the present invention. FIG. 11 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks, and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" or the like.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices. Further, formulas using these parameters and so on may be different from those explicitly disclosed in this specification.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be carried out explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In this specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In this specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Specific actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access." In the use in this specification, two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions and/or (both visible and invisible) optical regions, and so on.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a receiving section that receives a downlink control channel transmitted by using a downlink control channel element (CCE) including a certain number of resource element groups (REGs); and
a control section that controls reception of the downlink control channel, wherein
when a plurality of REGs constitute a REG group, and the downlink control channel is transmitted by using a plurality of time domains, the control section controls the reception on an assumption that one CCE at least includes REGs of different time domains, and the REGs of the different time domains are included in different REG groups.

2. The user terminal according to claim 1, wherein
the one CCE includes a plurality of REGs being continuous in a frequency direction in one time domain and belonging to one REG group.

3. The user terminal according to claim 1 or 2, wherein
when the downlink control channel is transmitted by using the plurality of time domains, the plurality of REGs included in one REG group are first mapped in the frequency direction.

4. The user terminal according to any one of claims 1 to 3, wherein
the control section controls not to monitor the downlink control channel corresponding to aggregation level 1.

5. The user terminal according to any one of claims 1 to 4, wherein
when the downlink control channel is transmitted by using the plurality of time domains, the control section switchably controls a receiving process on an assumption that the REGs of the different time domains are included in different REG groups and a receiving process on an assumption that the REGs of the different time domains are included in one REG group, based on a notification from a base station.

6. A radio communication method for a user terminal, the radio communication method comprising the steps of:
receiving a downlink control channel transmitted by using a downlink control channel element (CCE) including a certain number of resource element groups (REGs); and
controlling reception of the downlink control channel,
wherein
when a plurality of REGs constitute a REG group, and the downlink control channel is transmitted by using a plurality of time domains, the reception is controlled on an assumption that one CCE at least includes REGs of different time domains, and the REGs of the different time domains are included in different REG groups.
